(19) Europäisches Patentamt
European Patent Office
Office européen des brevets

(11) **EP 4 604 530 A1**

(12) **EUROPEAN PATENT APPLICATION**
published in accordance with Art. 153(4) EPC

(43) Date of publication:
**20.08.2025 Bulletin 2025/34**

(21) Application number: **23876618.2**

(22) Date of filing: **08.10.2023**

(51) International Patent Classification (IPC):
**H04N 19/182** *(2014.01)*

(52) Cooperative Patent Classification (CPC):
**H04N 19/182**

(86) International application number:
**PCT/CN2023/123385**

(87) International publication number:
**WO 2024/078416 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.10.2022 CN 202211248936
13.10.2022 CN 202211255923**

(71) Applicant: **Vivo Mobile Communication Co., Ltd.
Dongguan, Guangdong 523863 (CN)**

(72) Inventors:
• **ZHOU, Chuan
Dongguan, Guangdong 523863 (CN)**
• **LV, Zhuoyi
Dongguan, Guangdong 523863 (CN)**

(74) Representative: **Shieldmark
P.O. Box 90471
2509 LL The Hague (NL)**

(54) **CHROMATICITY COMPONENT PREDICTION METHOD AND APPARATUS, AND DEVICE**

(57) This application pertains to the field of coding and decoding technologies, and discloses a chroma component prediction method and apparatus, and a device. The chroma component prediction method provided in embodiments of this application includes: determining a template pixel of a target image block based on a target identifier of the target image block, where the template pixel is at least part of pixels in a pixel region adjacent to the target image block; fitting a first reconstructed chroma value, a first predicted chroma value, and a first luma value corresponding to the template pixel to obtain model parameters, where the model parameters are parameters of a chroma component prediction model corresponding to the target image block, and the chroma component prediction model is determined based on the target identifier; and determining, based on the model parameters and a second predicted chroma value and a second luma value corresponding to the target image block, a target predicted chroma value corresponding to the target image block.

```
┌─────────────────────────────────────────────────┐
│ Determine a template pixel of a target image     │──── S201
│ block based on a target identifier of the        │
│ target image block                               │
└─────────────────────────────────────────────────┘
                        │
                        ▼
┌─────────────────────────────────────────────────┐
│ Fit a first reconstructed chroma value, a first  │──── S202
│ predicted chroma value, and a first luma value   │
│ corresponding to the template pixel to obtain    │
│ model parameters                                 │
└─────────────────────────────────────────────────┘
                        │
                        ▼
┌─────────────────────────────────────────────────┐
│ Determine, based on the model parameters and a   │──── S203
│ second predicted chroma value and a second luma  │
│ value corresponding to the target image block, a │
│ target predicted chroma value corresponding to   │
│ the target image block                           │
└─────────────────────────────────────────────────┘
```

FIG. 2

EP 4 604 530 A1

**Description**

**CROSS-REFERENCE TO RELATED APPLICATIONS**

This application claims priority to Chinese Patent Application No. 202211248936.7, filed on October 12, 2022, which is incorporated herein by reference in its entirety. In addition, this application claims priority to Chinese Patent Application No. 202211255923.2, filed on October 13, 2022, which is incorporated herein by reference in its entirety.

**TECHNICAL FIELD**

This application pertains to the field of coding and decoding technologies, and specifically relates to a chroma component prediction method and apparatus, and a device.

**BACKGROUND**

In the related art, an intra prediction mode and a cross-component linear prediction mode are usually used to determine predicted chroma component values corresponding to an image block. Specifically, one predicted chroma value corresponding to the image block can be determined based on the intra prediction mode, another predicted chroma value corresponding to the image block can be determined based on the cross-component linear prediction mode, and chroma component fusion can be performed on the two predicted chroma values by using a preset weight combination, to obtain a final predicted chroma value.

In the foregoing process, chroma component fusion is performed on the two predicted chroma values only by using the preset weight combination, to obtain the final predicted chroma value. However, because the number of weight combinations is limited, accuracy of the final predicted chroma value is low.

**SUMMARY**

Embodiments of this application provide a chroma component prediction method and apparatus, and a device to resolve a problem that accuracy of a predicted chroma value in an existing solution is low.

According to a first aspect, a chroma component prediction method is provided and includes:

fitting a first reconstructed chroma value, a first predicted chroma value, and a first luma value corresponding to a template pixel of a target image block to obtain model parameters, where the model parameters are parameters of a chroma component prediction model corresponding to the target image block, and the template pixel is at least part of pixels in a pixel region adjacent to the target image block; and
determining, based on the model parameters and a second predicted chroma value and a second luma value corresponding to the target image block, a target predicted chroma value corresponding to the target image block.

According to a second aspect, a chroma component prediction apparatus is provided and includes:

a fitting module, configured to fit a first reconstructed chroma value, a first predicted chroma value, and a first luma value corresponding to a template pixel of a target image block to obtain model parameters, where the model parameters are parameters of a chroma component prediction model corresponding to the target image block, and the template pixel is at least part of pixels in a pixel region adjacent to the target image block; and
a second determining module, configured to determine, based on the model parameters and a second predicted chroma value and a second luma value corresponding to the target image block, a target predicted chroma value corresponding to the target image block.

According to a third aspect, a terminal is provided. The terminal includes a processor and a memory. The memory stores a program or instructions capable of running on the processor. When the program or instructions are executed by the processor, the steps of the method according to the first aspect are implemented.

According to a fourth aspect, a readable storage medium is provided. The readable storage medium stores a program or instructions. When the program or instructions are executed by a processor, the steps of the method according to the first aspect are implemented.

According to a fifth aspect, a chip is provided. The chip includes a processor and a communication interface. The communication interface is coupled to the processor. The processor is configured to run a program or instructions to implement the method according to the first aspect.

According to a sixth aspect, a computer program or program product is provided. The computer program or program product is stored in a storage medium. The computer program or program product is executed by at least one processor to implement the steps of the method according to the first aspect.

According to a seventh aspect, an electronic device is provided and configured to perform the steps of the method according to the first aspect.

In the embodiments of this application, the template pixel of the target image block is determined based on a target identifier of the target image block, where the template pixel is at least part of pixels in the pixel region adjacent to the target image block; the first reconstructed chroma value, the first predicted chroma value, and the first luma value corresponding to the template pixel are fitted to obtain the model parameters, where the model parameters are the parameters of the chroma component prediction model corresponding to the target image block, and the chroma component prediction model is determined based on the target identifier; and the target predicted chroma value corresponding to the target image block is determined based on the model parameters and the second predicted chroma value and the second luma value corresponding to the target image block.

In the embodiments of this application, a linear relationship between the first predicted chroma value and the first luma value is adjusted by fitting the first reconstructed chroma value, the first predicted chroma value, and the first luma value corresponding to the template pixel, so that the first predicted chroma value and the first luma value converge toward the first reconstructed chroma value to obtain the model parameters. In the related art, chroma component fusion is performed on two predicted chroma values corresponding to an image block by using a preset weight combination, and the number of weight combinations is limited, which reduces accuracy of predicted chroma component values. In the embodiments of this application, the linear relationship between the first predicted chroma value and the first luma value is adjusted by fitting the first reconstructed chroma value, the first predicted chroma value, and the first luma value corresponding to the template pixel, so that the first predicted chroma value and the first luma value converge toward the first reconstructed chroma value to obtain the model parameters, and the target predicted chroma value is determined based on the model parameters. In the process of determining the target predicted chroma value, the target predicted chroma value is strongly correlated with a fitting result of the first reconstructed chroma value, the first predicted chroma value, and the first luma value, and is no longer limited by the number of weight combinations. Therefore, accuracy of predicted chroma component values is improved.

## BRIEF DESCRIPTION OF DRAWINGS

FIG. 1 is a schematic diagram of a template pixel and an image block in the related art;
FIG. 2 is a schematic flowchart of a chroma component prediction method according to an embodiment of this application;
FIG. 3 is a first schematic diagram of a template pixel and an image block according to an embodiment of this application;
FIG. 4 is a second schematic diagram of a template pixel and an image block according to an embodiment of this application;
FIG. 5 is a diagram of a structure of a chroma component prediction apparatus according to an embodiment of this application;
FIG. 6 is a diagram of a structure of a communication device according to an embodiment of this application; and
FIG. 7 is a schematic diagram of a hardware structure of a terminal according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specified order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

In the related art, one predicted chroma value corresponding to an image block is determined based on an intra prediction mode, another predicted chroma value corresponding to the image block is determined based on a cross-component linear prediction mode, and chroma component fusion is performed on the two predicted chroma values by using a preset weight combination, to obtain a final predicted chroma value.

Specifically, the final predicted chroma value of the image block may be determined by using the following formula (1):

$$\mathrm{pred} = (\mathrm{w0} * \mathrm{pred0} + \mathrm{w1} * \mathrm{pred1} + (1 \ll (\mathrm{shift} - 1))) \gg \mathrm{shift} \qquad (1)$$

In the formula, pred represents the final predicted chroma value, pred0 represents a predicted chroma value determined based on an intra prediction mode, pred1 represents a predicted chroma value determined based on a cross-component linear prediction mode, and w0 and w1 represent a weight combination. For example, w0 and w1 may be {1, 3}, {3, 1}, or {2, 2}.

Optionally, the cross-component linear prediction mode includes a cross-component linear single model prediction mode and a cross-component linear multi-model prediction mode.

For the cross-component linear single model prediction mode, a predicted chroma value may be determined by using the following formula (2):

$$\mathrm{pred}_C(i, j) = \alpha \cdot \mathrm{rec}_L{}'(i, j) + \beta \qquad (2)$$

In the formula, $\mathrm{pred}_C(i,j)$ represents the predicted chroma value determined based on the cross-component linear single model prediction mode, $\mathrm{rec}_L{}'(i, j)$ represents a luma value of the image block, and $\alpha$ and $\beta$ represent model parameters. The model parameters may be obtained by performing minimum linear mean square error calculation on a reconstructed luma value and a reconstructed chroma value of a template pixel.

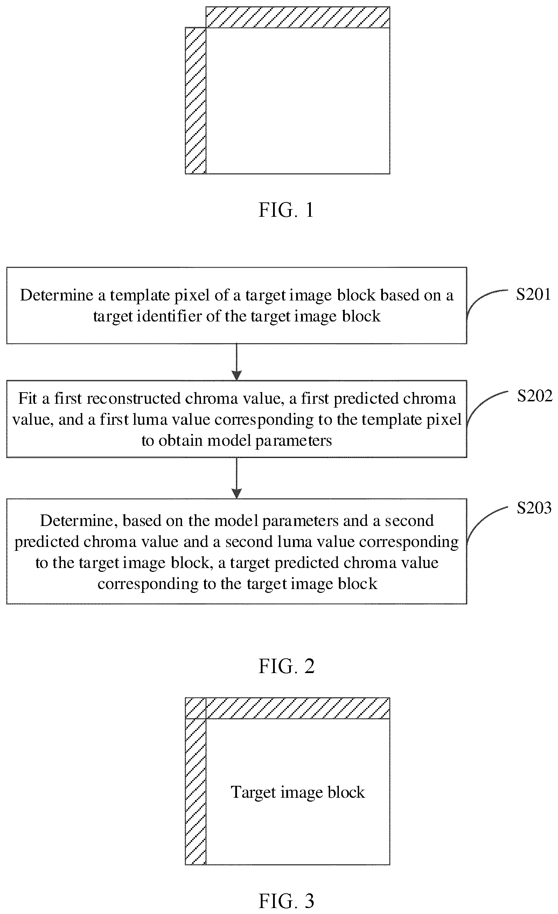

Refer to FIG. 1. As shown in FIG. 1, template pixels include a row of pixels located above an image block and adjacent to the image block, and a column of pixels located to the left of the image block and adjacent to the image block. Optionally, the template pixels include the row of pixels located above the image block and adjacent to the image block, or the column of pixels located to the left of the image block and adjacent to the image block.

For the cross-component linear multi-model prediction mode, luma values of the image block may be classified into two types based on an average luma value of the image block, and predicted chroma values are respectively obtained through calculation by using the foregoing formula (1).

However, in the foregoing process, chroma component fusion is performed on the predicted chroma component values only by using the preset weight combination. Because the number of weight combinations is limited, accuracy of the final predicted chroma component value is low.

To resolve the foregoing technical problem, embodiments of this application provide a chroma component prediction method. The chroma component prediction method provided in the embodiments of this application is hereinafter described in detail by using some embodiments and application scenarios thereof with reference to the accompanying drawings.

Refer to FIG. 2. FIG. 2 is a flowchart of a chroma component prediction method according to an embodiment of this application. The chroma component prediction method provided in this embodiment includes the following steps.

S201. Determine a template pixel of a target image block based on a target identifier of the target image block.

In this step, the target identifier of the target image block may be obtained by using a bit stream, and the target identifier is used to represent the template pixel of the target image block, so that the template pixel of the target image block is determined. The template pixel is at least part of pixels in a pixel region adjacent to the target image block. It should be noted that a chroma intra prediction mode corresponding to the target image block may also be obtained by using the bit stream, and then a first predicted chroma value and a second predicted chroma value corresponding to the target image block may be determined based on the chroma intra prediction mode.

Optionally, the template pixel is adjacent to the target image block and located above and/or to the left of the target image block; or

the template pixel is located in an upper part and/or a left part of the target image block.

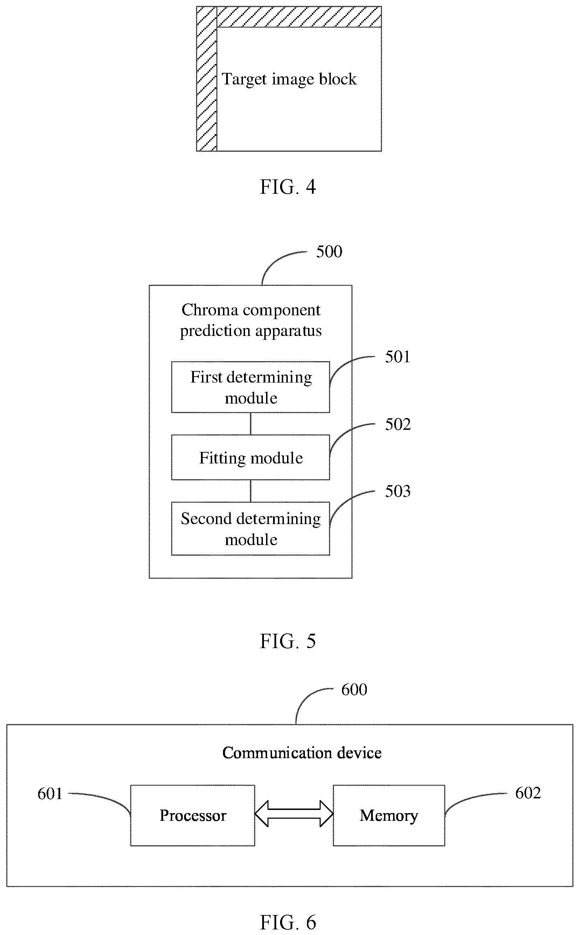

Refer to FIG. 3. As shown in FIG. 3, in an optional implementation, the template pixel is adjacent to the target image block and located above and/or to the left of the target image block. Refer to FIG. 4. As shown in FIG. 4, in another optional implementation, the template pixel is located in the upper part and/or the left part of the target image block.

Optionally, the target identifier is further used to represent a chroma component prediction model, and a chroma component prediction model corresponding to the target image block may be determined by using the target identifier. It should be understood that the chroma component prediction models may be classified into a linear model and a nonlinear model, or classified into a single model and a multi-model, that is, the chroma component prediction models include but are not limited to a cross-component linear single model prediction model, a cross-component linear multi-model prediction model, a cross-component nonlinear single model prediction model, and a cross-component nonlinear multi-model prediction model.

S202. Fit a first reconstructed chroma value, a first predicted chroma value, and a first luma value corresponding to the template pixel to obtain model parameters.

In this step, an optional implementation is to fit the first reconstructed chroma value, the first predicted chroma value, and the first luma value by using a matrix factorization method, to obtain the model parameters. The matrix factorization includes but is not limited to LDL matrix factorization, QR matrix factorization, and LU matrix factorization. It should be understood that the template pixel is a reconstructed pixel and that the first reconstructed chroma value corresponding to the template pixel may be directly obtained.

Another optional implementation is to perform minimum linear mean square error calculation on the first reconstructed chroma value, the first predicted chroma value, and the first luma value to obtain the model parameters.

It should be noted that the foregoing process of fitting the first reconstructed chroma value, the first predicted chroma value, and the first luma value is to adjust a linear relationship between the first predicted chroma value and the first luma value, so that the first predicted chroma value and the first luma value converge toward the first reconstructed chroma value, that is, the first predicted chroma value and the first luma value are adjusted, so that the first predicted chroma value and the first luma value are close to the first reconstructed chroma value.

S203. Determine, based on the model parameters and a second predicted chroma value and a second luma value corresponding to the target image block, a target predicted chroma value corresponding to the target image block.

In this step, the target predicted chroma value corresponding to the target image block is determined based on the model parameters and the second predicted chroma value and the second luma value corresponding to the target image block. For a specific implementation, refer to the following embodiment.

In this embodiment of this application, the template pixel of the target image block is determined based on the target identifier of the target image block, where the template pixel is at least part of pixels in the pixel region adjacent to the target image block; the first reconstructed chroma value, the first predicted chroma value, and the first luma value corresponding to the template pixel are fitted to obtain the model parameters, where the model parameters are the parameters of the chroma component prediction model corresponding to the target image block, and the chroma component prediction model is determined based on the target identifier; and the target predicted chroma value corresponding to the target image block is determined based on the model parameters and the second predicted chroma value and the second luma value corresponding to the target image block. In the related art, chroma component fusion is performed on two predicted chroma values corresponding to an image block by using a preset weight combination, and the number of weight combinations is limited, which reduces accuracy of predicted chroma component values. In this embodiment of this application, the linear relationship between the first predicted chroma value and the first luma value is adjusted by fitting the first reconstructed chroma value, the first predicted chroma value, and the first luma value corresponding to the template pixel, so that the first predicted chroma value and the first luma value converge toward the first reconstructed chroma value to obtain the model parameters, and the target predicted chroma value is determined based on the model parameters. In the process of determining the target predicted chroma value, the target predicted chroma value is strongly correlated with a fitting result of the first reconstructed chroma value, the first predicted chroma value, and the first luma value, and is no longer limited by the number of weight combinations. Therefore, accuracy of predicted chroma component values is improved.

Optionally, the determining, based on the model parameters and a second predicted chroma value and a second luma value corresponding to the target image block, a target predicted chroma value corresponding to the target image block includes:

performing calculation based on the model parameters and the second predicted chroma value and the second luma value corresponding to the target image block by using the chroma component prediction model, to obtain the target predicted chroma value corresponding to the target image block.

As mentioned above, the target identifier may represent the chroma component prediction model, and the chroma component prediction model includes a cross-component linear prediction model or a cross-component nonlinear prediction model.

In this embodiment, the model parameters, the second predicted chroma value corresponding to the target image block, and the second luma value corresponding to the target image block may be used as inputs of the chroma component prediction model, and the chroma component prediction model performs calculation based on the model parameters, the second predicted chroma value, and the second luma value, and outputs the target predicted chroma value corresponding to the target image block.

In an optional implementation, the chroma component prediction model is the cross-component linear single model prediction model. In this implementation, the target predicted chroma value may be determined by using a formula (3):

$$\mathrm{pred}_C(i,j) = \alpha_0 \cdot \mathrm{rec}'_L(i,j) + \alpha_1 \cdot \mathrm{pred}'_C(i,j) + \alpha_2 \cdot \mathrm{midValue} \qquad (3)$$

In the formula, $\text{pred}_C(i,j)$ represents the target predicted chroma value, $\alpha_0$, $\alpha_1$, and $\alpha_2$ represent the model parameters, $\text{rec}'_L(i,j)$ represents the second luma value, $\text{pred}'_C(i,j)$ represents the second predicted chroma value, and midValue represents a median corresponding to the target image block.

In another optional implementation, the chroma component prediction model is the cross-component nonlinear multi-model prediction model. In this implementation, the target predicted chroma value may be determined by using a formula (4):

$$\text{pred}_C(i,j) = \alpha_0 \cdot (((\text{rec}'_L(i,j))^2 + \text{midValue}) \gg \text{bitDepth}) + \alpha_1 \cdot$$
$$\text{rec}'_L(i,j) + \alpha_2 \cdot \text{pred}'_C(i,j) + \alpha_3 \cdot \text{midValue} \qquad (4)$$

In the formula, $\text{pred}_C(i,j)$ represents the target predicted chroma value, $\alpha_0$, $\alpha_1$, $\alpha_2$, and $\alpha_3$ represent the model parameters, $\text{rec}'_L(i,j)$ represents the second luma value, $\text{pred}'_C(i,j)$ represents the second predicted chroma value, bitDepth represents a bit depth of a video corresponding to the target image block, and midValue represents a median corresponding to the target image block.

The median is associated with the bit depth of the video. Optionally, in a case that the bit depth of the video is 10, the median is 512.

For the cross-component linear multi-model prediction model, second luma values corresponding to the target image block may be classified into two types based on an average luma value corresponding to the target image block, and target predicted chroma values are respectively obtained through calculation by using the foregoing formula (3).

For the cross-component nonlinear multi-model prediction model, second luma values corresponding to the target image block may be classified into two types based on an average luma value corresponding to the target image block, and target predicted chroma values are respectively obtained through calculation by using the foregoing formula (4).

Example 1:

If the target identifier includes 0, it indicates that chroma component fusion is not performed on the target image block;

if the target identifier includes 1, it indicates that the template pixel is located above and to the left of the target image block, and that chroma component fusion is performed by using the cross-component linear multi-model prediction model in the related art;

if the target identifier includes 2, it indicates that the template pixel is located above and to the left of the target image block, and that chroma component fusion is performed by using the cross-component linear single model prediction model provided in this embodiment; or

if the target identifier includes 3, it indicates that the template pixel is located above and to the left of the target image block, and that chroma component fusion is performed by using the cross-component linear multi-model prediction model provided in this embodiment.

Example 2:

If the target identifier includes 0, it indicates that chroma component fusion is not performed on the target image block;

if the target identifier includes 1, it indicates that the template pixel is located above and to the left of the target image block or located in the upper part and the left part of the target image block, and that chroma component fusion is performed by using the cross-component linear multi-model prediction model provided in this embodiment of this application; or

if the target identifier includes 2, it indicates that the template pixel is located above and to the left of the target image block or located in the upper part and the left part of the target image block, and that chroma component fusion is performed by using the cross-component nonlinear multi-model prediction model provided in this embodiment of this application.

Example 3:

If the target identifier includes 0, it indicates that chroma component fusion is not performed on the target image block;

if the target identifier includes 1, it indicates that the template pixel is located above and to the left of the target image block or located in the upper part and the left part of the target image block, and that chroma component fusion is performed by using the cross-component linear multi-model prediction model provided in this embodiment of this application; or

if the target identifier includes 2, it indicates that the template pixel is located above and to the left of the target image block or located in the upper part and the left part of the target image block, and that chroma component fusion is performed by using the cross-component linear single model prediction model provided in this embodiment of this application.

Example 4:

If the target identifier includes 0, it indicates that chroma component fusion is not performed on the target image block;

if the target identifier includes 1, it indicates that the chroma component prediction model is a linear model, or if the target identifier does not include 1, it indicates that the chroma component prediction model is a nonlinear model;

if the target identifier includes 2, it indicates that the template pixel is located above and to the left of the target image block or located in the upper part and the left part of the target image block, and that chroma component fusion is performed by using the cross-component prediction multi-model provided in this embodiment of this application;

if the target identifier includes 3, it indicates that the template pixel is located above and to the left of the target image block or located in the upper part and the left part of the target image block, and that chroma component fusion is performed by using the cross-component prediction single model provided in this embodiment of this application;

if the target identifier includes 4, it indicates that the template pixel is located above the target image block or located in the upper part of the target image block, and that chroma component fusion is performed by using the cross-component prediction single model provided in this embodiment of this application;

if the target identifier includes 5, it indicates that the template pixel is located to the left of the target image block or located in the left part of the target image block, and that chroma component fusion is performed by using the cross-component prediction single model provided in this embodiment of this application;

if the target identifier includes 6, it indicates that the template pixel is located above the target image block or located in the upper part of the target image block, and that chroma component fusion is performed by using the cross-component prediction multi-model provided in this embodiment of this application; or

if the target identifier includes 7, it indicates that the template pixel is located to the left of the target image block or located in the left part of the target image block, and that chroma component fusion is performed by using the cross-component prediction multi-model provided in this embodiment of this application.

For example, if the target identifier includes 1 and 7, it indicates that the template pixel is located to the left of the target image block or located in the left part of the target image block, and that chroma component fusion is performed by using the cross-component linear multi-model prediction model provided in this embodiment of this application.

For example, if the target identifier is 5, it indicates that the template pixel is located to the left of the target image block or located in the left part of the target image block, and that chroma component fusion is performed by using the cross-component nonlinear single model prediction model provided in this embodiment of this application.

Optionally, before the fitting a first reconstructed chroma value, a first predicted chroma value, and a first luma value corresponding to the template pixel, the method includes:

performing intra prediction on the template pixel based on a chroma intra prediction mode corresponding to the template pixel, to determine the first predicted chroma value; and

performing intra prediction on the template pixel based on a luma intra prediction mode corresponding to the template pixel, to determine the first luma value; or determining the first luma value based on a reconstructed luma value of the template pixel.

In this embodiment, optionally, intra prediction may be performed on the template pixel based on the chroma intra prediction mode corresponding to the template pixel to determine a first reference pixel, and a chroma value of the first reference pixel may be determined as the first predicted chroma value corresponding to the template pixel.

In an optional implementation, intra prediction may be performed on the template pixel based on the luma intra prediction mode corresponding to the template pixel to determine a second reference pixel, and the first luma value corresponding to the template pixel may be determined based on a luma value of the second reference pixel.

In another optional implementation, the reconstructed luma value of the template pixel is obtained, and the first luma value corresponding to the template pixel is determined based on the reconstructed luma value.

Optionally, after the determining the first luma value, the method includes:
determining whether to downsample the first luma value based on a video sampling format corresponding to the target image block. For example, when the video sampling format is YUV444, downsampling is not required; or when the video sampling format is YUV420, downsampling is required.

In a case that downsampling is required, the first luma value corresponding to the target image block is a downsampled luma value.

Optionally, before the determining, based on the model parameters and a second predicted chroma value and a second luma value corresponding to the target image block, a target predicted chroma value corresponding to the target image block, the method includes:

performing intra prediction on the target image block based on a chroma intra prediction mode corresponding to the target image block, to determine the second predicted chroma value; and
performing intra prediction on the target image block based on a luma intra prediction mode corresponding to the target image block, to determine the second luma value; or determining the second luma value based on a reconstructed luma value of the target image block.

In this embodiment, optionally, the chroma intra prediction mode and the luma intra prediction mode corresponding to the target image block may be obtained by using the bit stream. Intra prediction is performed on the target image block based on the chroma intra prediction mode corresponding to the target image block to determine a third reference pixel, and a chroma value of the third reference pixel is determined as the second predicted chroma value corresponding to the target image block.

In an optional implementation, intra prediction may be performed on the target image block based on the luma intra prediction mode corresponding to the target image block to determine a fourth reference pixel, and the second luma value corresponding to the target image block may be determined based on a luma value of the fourth reference pixel.

In another optional implementation, the reconstructed luma value of the target image block is obtained, and the second luma value corresponding to the target image block is determined based on the reconstructed luma value.

Optionally, after the determining the second luma value, the method includes:
determining whether to downsample the second luma value based on the video sampling format corresponding to the target image block. For example, when the video sampling format is YUV444, downsampling is not required; or when the video sampling format is YUV420, downsampling is required.

In a case that downsampling is required, the second luma value corresponding to the target image block is a downsampled luma value.

The chroma component prediction method provided in the embodiments of this application may be performed by a chroma component prediction apparatus. A chroma component prediction apparatus provided in the embodiments of this application is described by assuming that the chroma component prediction method is performed by the chroma component prediction apparatus in the embodiments of this application.

As shown in FIG. 5, an embodiment of this application further provides a chroma component prediction apparatus 500, including:

a fitting module 502, configured to fit a first reconstructed chroma value, a first predicted chroma value, and a first luma value corresponding to a template pixel of a target image block to obtain model parameters, where the model parameters are parameters of a chroma component prediction model corresponding to the target image block, and the template pixel is at least part of pixels in a pixel region adjacent to the target image block; and
a second determining module 503, configured to determine, based on the model parameters and a second predicted chroma value and a second luma value corresponding to the target image block, a target predicted chroma value corresponding to the target image block.

Optionally, the second determining module 503 is specifically configured to:
perform calculation based on the model parameters and the second predicted chroma value and the second luma value corresponding to the target image block by using the chroma component prediction model, to obtain the target predicted chroma value corresponding to the target image block.

Optionally, the chroma component prediction model is a cross-component linear single model prediction model, and the performing calculation based on the model parameters and the second predicted chroma value and the second luma value corresponding to the target image block by using the chroma component prediction model, to obtain the target predicted chroma value corresponding to the target image block includes: obtaining the target predicted chroma value based on the following formula:

$$\text{pred}_C(i, j) = \alpha_0 \cdot \text{rec}'_L(i, j) + \alpha_1 \cdot \text{pred}'_C(i, j) + \alpha_2 \cdot \text{midValue},$$

where $\text{pred}_c(i,j)$ represents the target predicted chroma value, $\alpha_0$, $\alpha_1$, and $\alpha_2$ represent the model parameters, $\text{rec}'_L(i, j)$ represents the second luma value, $\text{pred}'_C(i, j)$ represents the second predicted chroma value, and midValue represents a median corresponding to the target image block.

Optionally, the chroma component prediction model is a cross-component linear multi-model prediction model, and the performing calculation based on the model parameters and the second predicted chroma value and the second luma value corresponding to the target image block by using the chroma component prediction model, to obtain the target predicted chroma value corresponding to the target image block includes:

classifying, based on an average luma value corresponding to the target image block, second luma values corresponding to the target image block into two types, and for each type of second luma value, obtaining the corresponding target predicted chroma value by using the following formula:

$$\text{pred}_C(i, j) = \alpha_0 \cdot \text{rec}'_L(i, j) + \alpha_1 \cdot \text{pred}'_C(i, j) + \alpha_2 \cdot \text{midValue},$$

where $\text{pred}_c(i,j)$ represents the target predicted chroma value, $\alpha_0$, $\alpha_1$, and $\alpha_2$ represent the model parameters, $\text{rec}'_L(i, j)$ represents the second luma value, $\text{pred}'_C(i, j)$ represents the second predicted chroma value, and midValue represents a median corresponding to the target image block.

Optionally, the chroma component prediction apparatus 500 further includes:

a third determining module, configured to perform intra prediction on the template pixel based on a chroma intra prediction mode corresponding to the template pixel, to determine the first predicted chroma value; and
a fourth determining module, configured to perform intra prediction on the template pixel based on a luma intra prediction mode corresponding to the template pixel, to determine the first luma value; or determine the first luma value based on a reconstructed luma value of the template pixel.

Optionally, the chroma component prediction apparatus 500 further includes:

a fifth determining module, configured to perform intra prediction on the target image block based on a chroma intra prediction mode corresponding to the target image block, to determine the second predicted chroma value; and
a sixth determining module, configured to perform intra prediction on the target image block based on a luma intra prediction mode corresponding to the target image block, to determine the second luma value; or determine the second luma value based on a reconstructed luma value of the target image block.

Optionally, the template pixel is adjacent to the target image block and located above and/or to the left of the target image block; or
the template pixel is located in an upper part and/or a left part of the target image block.
Optionally, the chroma component prediction apparatus 500 further includes:
a first determining module 501, configured to determine the template pixel of the target image block based on a target identifier of the target image block.
Optionally, the chroma component prediction model is determined based on the target identifier of the target image block.
Optionally, the target identifier includes a first target identifier or a second target identifier, the first target identifier corresponds to a chroma component prediction single model, and the second target identifier corresponds to a chroma component prediction multi-model.
In the related art, chroma component fusion is performed on two predicted chroma values corresponding to an image block by using a preset weight combination, and the number of weight combinations is limited, which reduces accuracy of predicted chroma component values. In this embodiment of this application, a linear relationship between the first predicted chroma value and the first luma value is adjusted by fitting the first reconstructed chroma value, the first predicted chroma value, and the first luma value corresponding to the template pixel, so that the first predicted chroma value and the first luma value converge toward the first reconstructed chroma value to obtain the model parameters, and the target predicted chroma value is determined based on the model parameters. In the process of determining the target predicted chroma value, the target predicted chroma value is strongly correlated with a fitting result of the first reconstructed chroma value, the first predicted chroma value, and the first luma value, and is no longer limited by the number of weight combinations. Therefore, accuracy of predicted chroma component values is improved.

The apparatus embodiment corresponds to the foregoing embodiment of the chroma component prediction method shown in FIG. 2, and each implementation process and implementation in the foregoing method embodiment can be applied to the apparatus embodiment, with the same technical effect achieved.

The chroma component prediction apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal. The other devices may be a server, a network attached storage (Network Attached Storage, NAS), and the like. This is not specifically limited in this embodiment of this application.

Optionally, as shown in FIG. 6, an embodiment of this application further provides a communication device 600, including a processor 601 and a memory 602. The memory 602 stores a program or instructions capable of running on the processor 601. For example, when the communication device 600 is a terminal, and the program or instructions are executed by the processor 601, the steps of the foregoing embodiment of the chroma component prediction method are implemented, with the same technical effect achieved.

An embodiment of this application further provides a terminal, including a processor 601 and a communication interface. The processor 601 is configured to perform the following operations:

fitting a first reconstructed chroma value, a first predicted chroma value, and a first luma value corresponding to a template pixel of a target image block to obtain model parameters, where the model parameters are parameters of a chroma component prediction model corresponding to the target image block, and the template pixel is at least part of pixels in a pixel region adjacent to the target image block; and
determining, based on the model parameters and a second predicted chroma value and a second luma value corresponding to the target image block, a target predicted chroma value corresponding to the target image block.

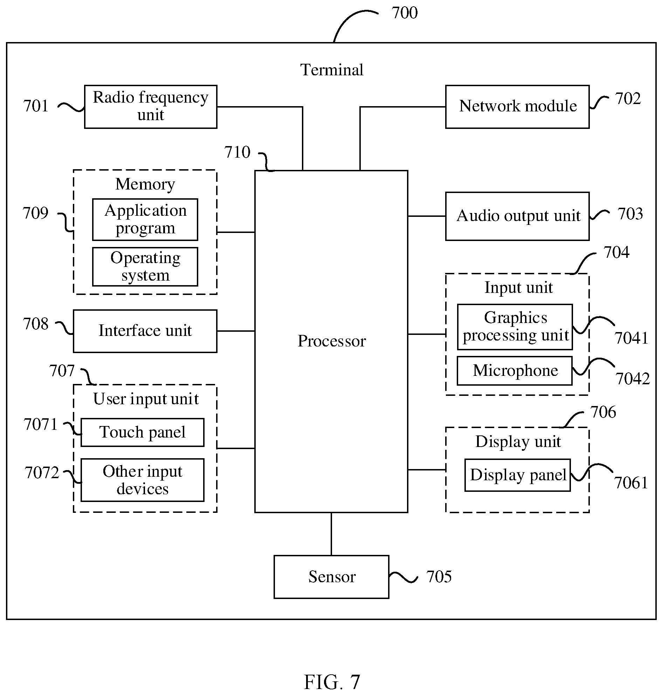

The terminal embodiment corresponds to the foregoing terminal-side method embodiment, and each implementation process and implementation of the foregoing method embodiment can be applied to the terminal embodiment, with the same technical effect achieved. Specifically, FIG. 7 is a schematic diagram of a hardware structure of a terminal for implementing an embodiment of this application.

The terminal 700 includes but is not limited to components such as a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the terminal 700 may further include a power supply (for example, a battery) supplying power to all components. The power supply may be logically connected to the processor 710 through a power management system. In this way, functions such as charge management, discharge management, and power consumption management are implemented by using the power management system. The terminal structure shown in FIG. 7 does not constitute a limitation on the terminal. The terminal may include more or fewer components than those shown in the figure, or some components are combined, or component arrangements are different. Details are not described herein again.

It should be understood that, in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 701 may transmit the downlink data to the processor 710 for processing. The radio frequency unit 701 may send uplink data to the network-side device. Usually, the radio frequency unit 701 includes but is not limited to an antenna, an amplifier, a transceiver, a coupler, a low noise amplifier, a duplexer, and the like.

The memory 709 may be configured to store software programs or instructions and various data. The memory 709 may primarily include a first storage area for storing programs or instructions and a second storage area for storing data. The first storage area may store an operating system, an application program or instructions required by at least one function (such as an audio play function and an image play function), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 709 in this embodiment of this application includes but is not limited to these and any other suitable types of memories.

The processor 710 may include one or more processing units. Optionally, the processor 710 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively not be integrated in the processor 710.

The processor 710 is configured to perform the following operations:

determining a template pixel of a target image block based on a target identifier of the target image block;
fitting a first reconstructed chroma value, a first predicted chroma value, and a first luma value corresponding to the template pixel to obtain model parameters; and
determining, based on the model parameters and a second predicted chroma value and a second luma value corresponding to the target image block, a target predicted chroma value corresponding to the target image block.

An embodiment of this application further provides a readable storage medium. The readable storage medium stores a program or instructions. When the program or instructions are executed by a processor, each process of the foregoing embodiment of the chroma component prediction method is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the chroma component prediction method, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing embodiment of the chroma component prediction method, with the same technical effect achieved. To avoid repetition, details are not described herein again.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

**Claims**

1. A chroma component prediction method, comprising:

    fitting a first reconstructed chroma value, a first predicted chroma value, and a first luma value corresponding to a template pixel of a target image block to obtain model parameters, wherein the model parameters are parameters of a chroma component prediction model corresponding to the target image block, and the template pixel is at least part of pixels in a pixel region adjacent to the target image block; and
    determining, based on the model parameters and a second predicted chroma value and a second luma value corresponding to the target image block, a target predicted chroma value corresponding to the target image block.

2. The method according to claim 1, wherein the determining, based on the model parameters and a second predicted chroma value and a second luma value corresponding to the target image block, a target predicted chroma value corresponding to the target image block comprises:
    performing calculation based on the model parameters and the second predicted chroma value and the second luma value corresponding to the target image block by using the chroma component prediction model, to obtain the target predicted chroma value corresponding to the target image block, wherein the chroma component prediction model comprises a cross-component linear prediction model or a cross-component nonlinear prediction model.

3. The method according to claim 2, wherein the chroma component prediction model is a cross-component linear single model prediction model, and the performing calculation based on the model parameters and the second predicted chroma value and the second luma value corresponding to the target image block by using the chroma component prediction model, to obtain the target predicted chroma value corresponding to the target image block comprises: obtaining the target predicted chroma value based on the following formula:

$$\mathrm{pred}_C(i,j) = \alpha_0 \cdot \mathrm{rec}_L'(i,j) + \alpha_1 \cdot \mathrm{pred}_C'(i,j) + \alpha_2 \cdot \mathrm{midValue},$$

    wherein $\mathrm{pred}_C(i,j)$ represents the target predicted chroma value, $\alpha_0$, $\alpha_1$, and $\alpha_2$ represent the model parameters, $\mathrm{rec}_L'(i,j)$ represents the second luma value, $\mathrm{pred}_C'(i,j)$ represents the second predicted chroma value, and midValue represents a median corresponding to the target image block.

4. The method according to claim 2, wherein the chroma component prediction model is a cross-component linear multi-model prediction model, and the performing calculation based on the model parameters and the second predicted chroma value and the second luma value corresponding to the target image block by using the chroma component prediction model, to obtain the target predicted chroma value corresponding to the target image block comprises:

    classifying, based on an average luma value corresponding to the target image block, second luma values corresponding to the target image block into two types, and for each type of second luma value, obtaining the corresponding target predicted chroma value by using the following formula:

$$\mathrm{pred}_C(i,j) = \alpha_0 \cdot \mathrm{rec}_L'(i,j) + \alpha_1 \cdot \mathrm{pred}_C'(i,j) + \alpha_2 \cdot \mathrm{midValue},$$

    wherein $\mathrm{pred}_C(i,j)$ represents the target predicted chroma value, $\alpha_0$, $\alpha_1$, and $\alpha_2$ represent the model parameters, $\mathrm{rec}_L'(i,j)$ represents the second luma value, $\mathrm{pred}_C'(i,j)$ represents the second predicted chroma value, and midValue represents a median corresponding to the target image block.

5. The method according to any one of claims 1 to 4, wherein before the fitting a first reconstructed chroma value, a first predicted chroma value, and a first luma value corresponding to a template pixel, the method comprises:

performing intra prediction on the template pixel based on a chroma intra prediction mode corresponding to the template pixel, to determine the first predicted chroma value; and
performing intra prediction on the template pixel based on a luma intra prediction mode corresponding to the template pixel, to determine the first luma value; or determining the first luma value based on a reconstructed luma value of the template pixel.

6. The method according to any one of claims 1 to 5, wherein before the determining, based on the model parameters and a second predicted chroma value and a second luma value corresponding to the target image block, a target predicted chroma value corresponding to the target image block, the method comprises:

performing intra prediction on the target image block based on a chroma intra prediction mode corresponding to the target image block, to determine the second predicted chroma value; and
performing intra prediction on the target image block based on a luma intra prediction mode corresponding to the target image block, to determine the second luma value; or determining the second luma value based on a reconstructed luma value of the target image block.

7. The method according to any one of claims 1 to 6, wherein the template pixel is adjacent to the target image block and located above and/or to the left of the target image block; or
the template pixel is located in an upper part and/or a left part of the target image block.

8. The method according to any one of claims 1 to 7, wherein the method further comprises:
determining the template pixel of the target image block based on a target identifier of the target image block.

9. The method according to any one of claims 1 to 8, wherein the chroma component prediction model is determined based on the target identifier of the target image block.

10. The method according to claim 9, wherein the target identifier comprises a first target identifier or a second target identifier, the first target identifier corresponds to a chroma component prediction single model, and the second target identifier corresponds to a chroma component prediction multi-model.

11. A chroma component prediction apparatus, comprising:

a fitting module, configured to fit a first reconstructed chroma value, a first predicted chroma value, and a first luma value corresponding to a template pixel of a target image block to obtain model parameters, wherein the model parameters are parameters of a chroma component prediction model corresponding to the target image block, and the template pixel is at least part of pixels in a pixel region adjacent to the target image block; and
a second determining module, configured to determine, based on the model parameters and a second predicted chroma value and a second luma value corresponding to the target image block, a target predicted chroma value corresponding to the target image block.

12. The apparatus according to claim 11, wherein the second determining module is specifically configured to:
perform calculation based on the model parameters and the second predicted chroma value and the second luma value corresponding to the target image block by using the chroma component prediction model, to obtain the target predicted chroma value corresponding to the target image block, wherein the chroma component prediction model comprises a cross-component linear prediction model or a cross-component nonlinear prediction model.

13. The apparatus according to claim 11 or 12, wherein the apparatus further comprises:
a first determining module, configured to determine the template pixel of the target image block based on a target identifier of the target image block.

14. The apparatus according to any one of claims 11 to 13, wherein the apparatus further comprises:

a third determining module, configured to perform intra prediction on the template pixel based on a chroma intra prediction mode corresponding to the template pixel, to determine the first predicted chroma value; and
a fourth determining module, configured to perform intra prediction on the template pixel based on a luma intra
prediction mode corresponding to the template pixel, to determine the first luma value; or determine the first luma
value based on a reconstructed luma value of the template pixel.

15. The apparatus according to any one of claims 11 to 13, wherein the apparatus further comprises:

a fifth determining module, configured to perform intra prediction on the target image block based on a chroma
intra prediction mode corresponding to the target image block, to determine the second predicted chroma value;
and
a sixth determining module, configured to perform intra prediction on the target image block based on a luma intra
prediction mode corresponding to the target image block, to determine the second luma value; or determine the
second luma value based on a reconstructed luma value of the target image block.

16. The apparatus according to any one of claims 11 to 15, wherein the template pixel is adjacent to the target image block
and located above and/or to the left of the target image block; or
the template pixel is located in an upper part and/or a left part of the target image block.

17. A terminal, comprising a processor and a memory, wherein the memory stores a program or instructions capable of
running on the processor, and when the program or instructions are executed by the processor, the steps of the
chroma component prediction method according to any one of claims 1 to 10 are implemented.

18. A readable storage medium, wherein the readable storage medium stores a program or instructions, and when the
program or instructions are executed by a processor, the steps of the chroma component prediction method according
to any one of claims 1 to 10 are implemented.

19. A chip, wherein the chip comprises a processor and a communication interface, the communication interface is
coupled to the processor, and the processor is configured to run a program or instructions to implement the steps of the
chroma component prediction method according to any one of claims 1 to 10.

20. A computer program product, wherein the computer program product is stored in a storage medium, and the computer
program product is executed by at least one processor to implement the steps of the chroma component prediction
method according to any one of claims 1 to 10.

21. An electronic device, configured to perform the steps of the chroma component prediction method according to any
one of claims 1 to 10.

FIG. 1

| Determine a template pixel of a target image block based on a target identifier of the target image block | S201 |
| Fit a first reconstructed chroma value, a first predicted chroma value, and a first luma value corresponding to the template pixel to obtain model parameters | S202 |
| Determine, based on the model parameters and a second predicted chroma value and a second luma value corresponding to the target image block, a target predicted chroma value corresponding to the target image block | S203 |

FIG. 2

Target image block

FIG. 3

Target image block

FIG. 4

500

Chroma component
prediction apparatus

First determining
module

501

Fitting module

502

Second determining
module

503

FIG. 5

600

Communication device

601

Processor ⟺ Memory

602

FIG. 6

FIG. 7

## INTERNATIONAL SEARCH REPORT

| | International application No. |
|---|---|
| | **PCT/CN2023/123385** |

| A. | CLASSIFICATION OF SUBJECT MATTER |
|---|---|

H04N 19/182(2014.01)i

According to International Patent Classification (IPC) or to both national classification and IPC

| B. | FIELDS SEARCHED |
|---|---|

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS, CNTXT, CNKI, VEN, WOTXT, EPTXT, USTXT: 色度, 预测, 重建, 重构, 块, 像素, 相邻, 邻居, 模型, 亮度, 拟合, chroma, prediction, reconstruction, block, pixel, adjacent, neighbor, model, brightness, luma, fitting

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 115118990 A (TENCENT TECHNOLOGY (SHENZHEN) CO., LTD.) 27 September 2022 (2022-09-27) entire document | 1-21 |
| A | CN 115002485 A (GUANGDONG OPPO MOBILE COMMUNICATIONS CO., LTD.) 02 September 2022 (2022-09-02) entire document | 1-21 |
| A | CN 112235577 A (HUAWEI TECHNOLOGIES CO., LTD.) 15 January 2021 (2021-01-15) entire document | 1-21 |
| A | KR 20190140820 A (KWANGWOON UNIVERSITY INDUSTRY-ACADEMIC COLLABORATION FOUNDATION) 20 December 2019 (2019-12-20) entire document | 1-21 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 January 2024** | **04 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/123385**

| Patent document cited in search report | | | Publication date (day/month/year) | Patent family member(s) | | | Publication date (day/month/year) |
|---|---|---|---|---|---|---|---|
| CN | 115118990 | A | 27 September 2022 | None | | | |
| CN | 115002485 | A | 02 September 2022 | WO | 2021244197 | A1 | 09 December 2021 |
| | | | | TW | 202147844 | A | 16 December 2021 |
| | | | | MX | 2022009939 | A | 12 September 2022 |
| CN | 112235577 | A | 15 January 2021 | None | | | |
| KR | 20190140820 | A | 20 December 2019 | KR | 102389267 | B1 | 20 April 2022 |
| | | | | KR | 20230136900 | A | 27 September 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211248936

- CN 202211255923